# FASCICULE DE BREVET EUROPEEN

(11) **EP 3 530 512 B1**
(45) Date de publication et mention de la délivrance du brevet: **14.08.2024**
(21) Numéro de dépôt: 19158857.3
(22) Date de dépôt: 22.02.2019
(51) Int. Cl.: B60L 1/10, B60L 1/12, H02J 7/00, B60L 58/12, B60L 58/21, B60L 58/22, B60L 58/20

(54) **DISPOSITIF DE GESTION DE SYSTÈMES DE STOCKAGE D'ÉNERGIE, NOTAMMENT POUR VÉHICULE FERROVIAIRE**
STEUERVORRICHTUNG VON ENERGIESPEICHERSYSTEMEN, INSBESONDERE FÜR SCHIENENFAHRZEUG
DEVICE FOR MANAGING SYSTEMS FOR STORING ENERGY, IN PARTICULAR FOR A RAILWAY VEHICLE

(30) Priorité: 22.02.2018 FR 1851514
(43) Date de publication de la demande: 28.08.2019
(73) Titulaire: ALSTOM Holdings, 93400 Saint-Ouen-sur-Seine (FR)
(72) Inventeur: VIENNE, Mathieu, 17000 LA ROCHELLE (FR)
(74) Mandataire: Lavoix

(56) Documents cités:
- EP-A1- 3 028 336
- EP-B1- 3 028 336
- KR-B1- 101 553 063
- US-A1- 2013 221 897
- US-A1- 2013 257 381
- US-A1- 2013 300 192
- US-A1- 2016 352 131

## Description

La présente invention concerne un dispositif de gestion d'une pluralité de systèmes de stockage d'énergie électrique agencés en parallèle et connectés à au moins une charge. De tels systèmes de stockage d'énergie sont notamment utilisés dans des véhicules ferroviaires.

Des exemples de dispositifs de gestion sont décrits dans US2016/352131, EP 3 028 336, US 2013/300192 et US 2013/221897.

Le système de stockage comporte habituellement au moins un moyen de stockage d'énergie, tel qu'une batterie, et un convertisseur de puissance connecté au moyen de stockage d'énergie correspondant.

L'efficacité de la conversion d'énergie dépend de la puissance appelée ou absorbée, et éventuellement de l'état de charge du système de stockage d'énergie. Lorsque l'on dispose d'une pluralité de systèmes de stockage d'énergie, il est possible de diviser la puissance appelée par l'au moins une charge entre les différents systèmes de stockage.

Dans le cas d'un véhicule ferroviaire, l'au moins une charge comporte habituellement au moins un système de traction du véhicule, et au moins un équipement auxiliaire, notamment des équipements de bord alimentés en énergie électrique.

Dans certains cas, notamment lorsque le véhicule ferroviaire avance sans traction (marche sur l'erre), la puissance appelée par ce véhicule ferroviaire se limite à la puissance appelée par les équipements auxiliaires, qui est faible (par exemple de l'ordre de 100kW) par rapport à la puissance délivrable ou absorbable par l'ensemble des systèmes de stockage d'énergie (par exemple de l'ordre de 1,2 MW).

En d'autres termes, l'utilisation des systèmes de stockage d'énergie n'est pas optimisée dans certains cas.

L'invention a notamment pour but de remédier à cet inconvénient, en améliorant l'efficacité de la conversion d'énergie et du stockage associé.

A cet effet, l'invention a notamment pour objet un dispositif de gestion selon la revendication 1.

L'invention permet donc de désactiver certains systèmes de stockage d'énergie, pour ne conserver que ceux nécessaires pour répondre à la puissance appelée, optimisant ainsi l'utilisation des systèmes de stockage d'énergie.

Un dispositif de gestion selon l'invention peut comporter en outre l'une ou plusieurs des caractéristiques suivantes, prises seules ou selon toutes combinaisons techniquement envisageables.
- La puissance disponible correspond à la puissance délivrable par chaque système de stockage et à la puissance absorbable par chaque système de stockage.
- Le dispositif de gestion est configuré pour la gestion de systèmes de stockage d'énergie comprenant chacun au moins un moyen de stockage d'énergie et un convertisseur de puissance connecté au moyen de stockage d'énergie correspondant.
- Les moyens de détermination ont configurés pour minimiser les différences entre les énergies stockées dans les différents systèmes de stockage d'énergie, notamment en activant en priorité les systèmes de stockage stockant la plus grande quantité d'énergie, dans le cas où la puissance requise est positive, ou les systèmes de stockage stockant la plus faible quantité d'énergie, dans le cas où la puissance requise est négative et avantageusement en minimisant les écarts de sollicitation des différents système de stockage d'énergie.
- Les moyens de détermination sont configurés pour activer en priorité les systèmes de stockage présentant la meilleure efficacité en fonction de la puissance requise évaluée et de l'énergie stockée.
- Les moyens de détermination sont configurés pour se référer à une table d'efficacité à deux entrées, donnant pour chaque système de stockage l'efficacité de ce système de stockage en fonction d'un état de charge du système de stockage et de l'énergie requise évaluée.

L'invention concerne également un procédé de gestion selon la revendication 6.

Un procédé de gestion selon l'invention peut comporter en outre l'une ou plusieurs des caractéristiques suivantes, prises seules ou selon toutes combinaisons techniquement envisageables.
- L'étape de détermination est réalisée en minimisant les différences entre les énergies stockées dans les différents systèmes de stockage d'énergie, notamment en activant en priorité les systèmes de stockage stockant la plus grande quantité d'énergie dans le cas d'une puissance à délivrer ou les systèmes de stockage stockant la plus moins quantité d'énergie dans le cas d'une puissance à absorber et en minimisant les écarts de sollicitation des différents système de stockage d'énergie.
- Au cours de l'étape de détermination, on active en priorité les systèmes de stockage présentant la meilleure efficacité en fonction de puissance requise évaluée et de l'énergie stockée, et/ou on désactive en priorité les systèmes de stockage présentant la moins bonne efficacité en fonction de la puissance requise évaluée et de l'énergie stockée.

L'invention sera mieux comprise à la lecture de la description qui va suivre, donnée uniquement à titre d'exemple et faite en se référant aux figures annexées, parmi lesquelles :
- la figure 1 représente schématiquement un dispositif de gestion selon l'invention, et des systèmes de stockage d'énergie connectés à des systèmes de traction et à des équipements auxiliaires ;
- la figure 2 représente schématiquement, plus en détail, le dispositif de gestion de la figure 1.

On a représenté sur les figures un dispositif 10 de gestion d'une pluralité de systèmes de stockage d'énergie électrique 12. Ce dispositif de gestion 10 est par exemple destiné à équiper un véhicule ferroviaire.

Les systèmes de stockage d'énergie 12 sont agencés en parallèle, et sont connectés à au moins une charge. Les systèmes de stockage d'énergie 12 sont tous propres à délivrer la même tension électrique.

Chaque système de stockage d'énergie 12 comporte de manière classique au moins un moyen de stockage d'énergie 20, tel qu'une batterie et un convertisseur de puissance 22 connecté au moyen de stockage d'énergie 20 correspondant.

Dans le cas d'un véhicule ferroviaire, l'au moins une charge comporte un système de traction 14, de préférence une pluralité de systèmes de traction 14, et au moins un équipement auxiliaire 16, de préférence une pluralité d'équipements auxiliaires 16.

Les systèmes de traction sont propres à consommer de la puissance électrique mais également, notamment lors de phases de freinage du véhicule ferroviaire, à délivrer une puissance électrique aux équipements auxiliaires et/ou aux convertisseurs de puissance 22 (on parle de freinage régénératif). Avantageusement, lors de phases de freinage les systèmes de traction sont propres à générer une puissance électrique liée à l'énergie cinétique du véhicule et à la transmettre aux équipements auxiliaires 16 et également aux systèmes de stockage 12 quand la puissance générée est supérieure à la puissance nécessaire au fonctionnement des équipements auxiliaires 16.

Avantageusement, un convertisseur auxiliaire 18 est agencé entre les systèmes de stockage d'énergie 12 et les équipements auxiliaires 16.

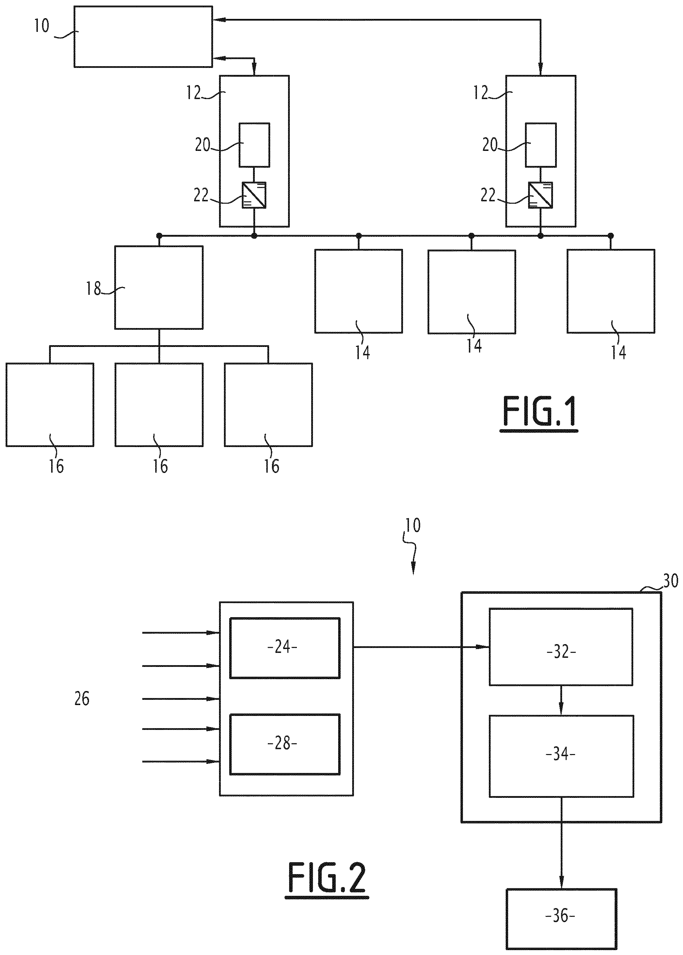

Le dispositif de gestion 10 est représenté plus en détails sur la figure 2.

Le dispositif de gestion 10 comporte des moyens 24 d'évaluation d'une puissance requise nécessaire à l'alimentation de l'au moins une charge 14, 16. La puissance requise est déterminée en fonction de la puissance appelée par l'au moins une charge 14, 16 mais également en fonction de la puissance générée par l'au moins une charge 14. De tels moyens d'évaluation 24 sont connus en soi.

Les moyens d'évaluation 24 reçoivent des informations 26 permettant d'évaluer la puissance requise. Ces informations 26 comportent par exemple au moins l'une des informations suivantes : des informations de caractéristiques des systèmes de traction 14 et des équipements auxiliaires 16, une information d'une requête d'énergie/puissance provenant d'un opérateur (notamment un conducteur du véhicule ferroviaire), une information de vitesse du véhicule ferroviaire, une mesure de puissance appelée ou fournie/générée par les systèmes de traction 14, et une mesure de puissance appelée par les équipements auxiliaires 16.

Le dispositif de gestion 10 comporte par ailleurs des moyens 28 d'estimation d'une puissance reçue par les systèmes de stockage d'énergie 12, c'est-à-dire par chaque système de stockage d'énergie 12, notamment depuis des sources d'alimentation extérieures (caténaires, alimentation par le sol, etc.) et par freinage régénératif.

Le dispositif de gestion 10 comporte également des moyens 30 de détermination de chaque système de stockage 12 à activer et de chaque système de stockage 12 à désactiver, en fonction de la puissance requise évaluée et de la puissance reçue estimée.

Par exemple, les moyens de détermination 30 comportent des moyens 32 de calcul de l'énergie stockée et de la puissance disponible (délivrable et/ou absorbable) dans les systèmes de stockage 12, c'est-à-dire dans chaque système de stockage, et de la quantité d'énergie optimale à utiliser, en fonction de la puissance requise évaluée et de la puissance reçue estimée.

Les moyens de détermination 30 comportent également des moyens 34 de choix de chaque système de stockage 12 à activer et de chaque système de stockage 12 à désactiver, en fonction de la puissance requise évaluée, de la puissance reçue estimée de la puissance disponible déterminée et de l'énergie stockée.

En effet, en connaissant la puissance requise, c'est-à-dire la puissance à fournir, la puissance reçue et la puissance disponible (délivrable et/ou absorbable) et l'énergie stockée dans les systèmes de stockage 12, il est possible de déterminer combien de systèmes de stockage 12 sont nécessaires pour assurer le niveau de puissance demandé avec un rendement optimisé, tout en gardant une marge de puissance suffisante pour laisser le temps de réactiver d'autres systèmes de stockage le cas échéant. Ainsi, seuls ces systèmes de stockage 12 nécessaires sont utilisés, les autres étant désactivés.

Avantageusement, les moyens de détermination 30 sont configurés pour activer en priorité les systèmes de stockage 12 présentant la meilleure efficacité en fonction de la puissance requise évaluée, et/ou en variante pour désactiver en priorité les systèmes de stockage 12 présentant la moins bonne efficacité en fonction de la puissance requise évaluée.

A cet effet, on établira une table d'efficacité à deux entrées, donnant pour chaque système de stockage 12 l'efficacité de ce système de stockage 12 en fonction de son état de charge et de la puissance appelée. L'homme du métier saura établir une telle table d'efficacité, connue en soit.

Avantageusement, les moyens de choix 34 sont également configurés pour minimiser les différences entre les énergies stockées dans les différents systèmes de stockage d'énergie 12, notamment en activant en priorité les systèmes de stockage stockant la plus grande quantité d'énergie dans le cas d'une puissance à délivrer ou les systèmes de stockage stockant la plus faible quantité d'énergie dans le cas d'une puissance à absorber et en minimisant les écarts de sollicitation des différents système de stockage d'énergie.

Ceci permet de minimiser les écarts d'énergies stockées dans chacun des systèmes de stockage 12, sans créer de rupture d'alimentation de ces systèmes de stockage 12. L'utilisation de l'énergie stockée se fait alors globalement de manière homogène, pour ne pas faire vieillir prématurément certains systèmes de stockage alors que d'autres ne seraient pas utilisés.

Le dispositif de gestion 10 comporte enfin des moyens 36 d'activation et de désactivation des systèmes de stockage d'énergie 12 indépendamment les uns des autres, commandés en fonction des moyens de détermination 30. Ainsi, certains systèmes de stockage 12, déterminés par les moyens de détermination 30, sont désactivés, et les autres sont activés.

L'activation et la désactivation d'un système de stockage 12 est par exemple réalisée en activant ou désactivant le convertisseur de puissance 22 correspondant.

Le dispositif de gestion 10 selon l'invention permet de réaliser un procédé de gestion qui va maintenant être décrit.

Le procédé de gestion comporte :
- un étape d'évaluation d'une puissance requise nécessaire à l'alimentation de l'au moins un système de traction et de l'au moins une charge auxiliaire,
- une étape de calcul d'une puissance disponible, c'est-à-dire délivrable et absorbable par les systèmes de stockage d'énergie,
- une étape de détermination du nombre optimal de système de stockage d'énergie à activer en fonction de la puissance requise, de la puissance disponible et du niveau d'énergie stockée,
- une étape de détermination de chaque système de stockage à activer et de chaque système de stockage à désactiver, en fonction de la puissance requise évaluée, de la puissance disponible et du niveau d'énergie stockée, et
- une étape d'activation et de désactivation des systèmes de stockage d'énergie indépendamment les uns des autres, suite à l'étape de détermination.

Avantageusement, l'étape de détermination est réalisée en minimisant les différences entre les énergies stockées dans les différents systèmes de stockage d'énergie, notamment en activant en priorité les systèmes de stockage stockant la plus grande quantité d'énergie dans le cas d'une puissance à délivrer ou les systèmes de stockage stockant la plus faible quantité d'énergie dans le cas d'une puissance à absorber.

Avantageusement, le procédé comprend une étape d'estimation d'une puissance reçue par les systèmes de stockage et les étapes de détermination sont effectuées en fonction de la puissance reçue estimée.

De préférence, au cours de l'étape de détermination, on active en priorité les systèmes de stockage présentant la meilleure efficacité en fonction de la puissance requise évaluée et du niveau d'énergie stockée. Par exemple, l'étape de détermination est réalisée en se référant à une table d'efficacité à deux entrées, donnant pour chaque système de stockage 12 l'efficacité de ce système de stockage 12 en fonction de son état de charge et de la puissance appelée.

La gestion des systèmes de stockage 12 est de préférence réalisée en temps réel, la puissance appelée par le train évoluant au cours du temps.

Ainsi, les étapes d'évaluation, d'estimation et de détermination sont réalisées en continu, pour activer ou désactiver en temps réel les systèmes de stockage 12.

On notera que l'invention n'est pas limitée au mode de réalisation précédemment décrit, mais pourrait présenter diverses variantes complémentaires.

## Revendications

1. Dispositif (10) de gestion d'une pluralité de systèmes de stockage d'énergie (12) agencés en parallèle et connectés à au moins une charge (14, 16), notamment au moins un système de traction (14) et/ou au moins un équipement auxiliaire (16), comportant :
- des moyens (24) d'évaluation d'une puissance requise, qui est la puissance nécessaire à l'alimentation de l'au moins une charge (14, 16),
- des moyens (32) de calcul d'une puissance disponible dans les systèmes de stockage d'énergie (12), la puissance disponible correspondant à la puissance délivrable par chaque système de stockage et/ou à la puissance absorbable par chaque système de stockage,
- des moyens (36) d'activation et de désactivation des systèmes de stockage d'énergie (12) indépendamment les uns des autres,
- des moyens (30) de détermination de chaque système de stockage (12) à activer ou à désactiver, en fonction de la puissance requise évaluée et de la puissance disponible et avantageusement de l'énergie stockée dans chaque système de stockage,
**caractérisé en ce que** le dispositif de gestion comporte des moyens d'estimation d'une puissance reçue par les systèmes de stockage d'énergie (12), la puissance reçue étant celle fournie par des sources d'alimentation extérieures et par freinage régénératif, et **en ce que** les moyens de détermination de chaque système de stockage à activer ou à désactiver sont propres à déterminer chaque système de stockage d'énergie à activer ou à désactiver également en fonction de la puissance reçue estimée.

2. Dispositif de gestion (10) selon l'une quelconque des revendications précédentes, configuré pour la gestion de systèmes de stockage d'énergie (12) comprenant chacun au moins un moyen de stockage d'énergie (20) et un convertisseur de puissance (22) connecté au moyen de stockage d'énergie (20) correspondant.

3. Dispositif de gestion (10) selon l'une quelconque des revendications précédentes, dans lequel les moyens de détermination (30) sont configurés pour minimiser les différences entre les énergies stockées dans les différents systèmes de stockage d'énergie (12), notamment en activant en priorité les systèmes de stockage (12) stockant la plus grande quantité d'énergie, dans le cas d'une puissance à délivrer, ou les systèmes de stockage stockant la plus faible quantité d'énergie, dans le cas d'une puissance à absorber et avantageusement en minimisant les écarts de sollicitation des différents système de stockage d'énergie.

4. Dispositif de gestion (10) selon l'une quelconque des revendications précédentes, dans lequel les moyens de détermination (30) sont configurés pour activer en priorité les systèmes de stockage (12) présentant la meilleure efficacité en fonction de la puissance requise évaluée et de l'énergie stockée.

5. Dispositif de gestion (10) selon la revendication 4, dans lequel les moyens de détermination (30) sont configurés pour se référer à une table d'efficacité à deux entrées, donnant pour chaque système de stockage (12) l'efficacité de ce système de stockage (12) en fonction d'un état de charge du système de stockage et de la puissance requise évaluée.

6. Procédé de gestion d'une pluralité de systèmes de stockage d'énergie (12) agencés en parallèle et connectés à au moins une charge (14, 16), au moyen d'un dispositif de gestion (10) selon l'une quelconque des revendications précédentes, comportant
- un étape d'évaluation de la puissance requise, qui est la puissance nécessaire à l'alimentation de l'au moins une charge (14, 16),
- une étape de calcul de la puissance disponible dans les systèmes de stockage d'énergie (12), la puissance disponible correspondant à la puissance délivrable par chaque système de stockage et/ou à la puissance absorbable par chaque système de stockage,
**caractérisé en ce que** le procédé comporte :
- une étape d'estimation d'une puissance reçue par les systèmes de stockage d'énergie (12), la puissance reçue étant celle fournie par des sources d'alimentation extérieures et par freinage régénératif,
- une étape de détermination du nombre de système de stockage d'énergie à activer, et
- une étape de détermination du ou des systèmes de stockage à activer ou à désactiver, en fonction de la puissance requise évaluée, de la puissance disponible, de la puissance reçue estimée, et avantageusement de l'énergie stockée dans chaque système de stockage, et
- une étape d'activation et de désactivation des systèmes de stockage d'énergie (12) déterminés, indépendamment les uns des autres, suite aux étapes de détermination.

7. Procédé de gestion selon la revendication 6, dans lequel l'étape de détermination est réalisée en minimisant les différences entre les énergies stockées dans les différents systèmes de stockage d'énergie, notamment en activant en priorité les systèmes de stockage stockant la plus grande quantité d'énergie dans le cas d'une puissance à délivrer ou les systèmes de stockage stockant la plus moins quantité d'énergie dans le cas d'une puissance à absorber et en minimisant les écarts de sollicitation des différents système de stockage d'énergie.

8. Procédé de gestion selon l'une quelconque des revendications 6 ou 7, dans lequel, au cours de l'étape de détermination, on active en priorité les systèmes de stockage (12) présentant la meilleure efficacité en fonction de puissance requise évaluée et de l'énergie stockée, et/ou on désactive en priorité les systèmes de stockage (12) présentant la moins bonne efficacité en fonction de la puissance requise évaluée et de l'énergie stockée.

## Patentansprüche

1. Vorrichtung (10) zur Verwaltung einer Vielzahl von Energiespeichersystemen (12), die parallel angeordnet und mit mindestens einer Last (14, 16) verbunden sind, insbesondere mindestens einem Zugsystem (14) und/oder mindestens einer Zusatzausrüstung (16), umfassend:
- Einrichtungen (24) zum Bewerten einer erforderlichen Leistung, die die notwendige Leistung zum Versorgen der mindestens einen Last (14, 16) ist,
- Einrichtungen (32) zum Berechnen einer in den Energiespeichersystemen (12) verfügbaren Leistung, wobei die verfügbare Leistung der Leistung entspricht, die von jedem Speichersystem bereitstellbar ist und/oder der Leistung, die von jedem Speichersystem absorbierbar ist,
- Einrichtungen (36) zum Aktivieren und Deaktivieren der Energiespeichersysteme (12) unabhängig voneinander,
- Einrichtungen (30) zum Bestimmen von jedem Speichersystem (12), das abhängig von der bewerteten erforderlichen Leistung und der verfügbaren Leistung und vorteilhafterweise der in jedem Speichersystem gespeicherten Energie aktiviert oder deaktiviert werden soll,
**dadurch gekennzeichnet, dass** die Verwaltungsvorrichtung Einrichtungen zum Schätzen einer von den Energiespeichersystemen (12) empfangenen Leistung umfasst, wobei die empfangene Leistung jene ist, die von externen Versorgungsquellen und durch regeneratives Bremsen bereitgestellt wird, und dadurch, dass die Einrichtungen zum Bestimmen von jedem Speichersystem, das aktiviert oder deaktiviert werden soll, geeignet sind, um jedes Energiespeichersystem, das aktiviert oder deaktiviert werden soll, auch abhängig von der geschätzten empfangenen Leistung zu bestimmen.

2. Verwaltungsvorrichtung (10) nach einem der vorherigen Ansprüche, die für die Verwaltung von Energiespeichersystemen (12) konfiguriert ist, umfassend jeweils mindestens eine Energiespeichereinrichtung (20) und einen Leistungswandler (22), der mit der entsprechenden Energiespeichereinrichtung (20) verbunden ist.

3. Verwaltungsvorrichtung (10) nach einem der vorherigen Ansprüche, wobei die Bestimmungseinrichtungen (30) konfiguriert sind, um die Unterschiede zwischen den in den verschiedenen Energiespeichersystemen (12) gespeicherten Energien zu minimieren, insbesondere indem sie im Fall einer abzugebenden Leistung vorrangig die Speichersysteme (12), die die größte Energiemenge speichern, oder im Fall einer aufzunehmenden Leistung die Speichersysteme, die die geringste Energiemenge speichern, aktivieren, und vorteilhafterweise indem sie die Unterschiede in der Beanspruchung der verschiedenen Energiespeichersysteme minimieren.

4. Verwaltungsvorrichtung (10) nach einem der vorherigen Ansprüche, wobei die Bestimmungseinrichtungen (30) konfiguriert sind, um vorrangig die Speichersysteme (12) zu aktivieren, die abhängig von der bewerteten erforderlichen Leistung und der gespeicherten Energie den höchsten Wirkungsgrad aufweisen.

5. Verwaltungsvorrichtung (10) nach Anspruch 4, wobei die Bestimmungseinrichtungen (30) konfiguriert sind, um sich auf eine Effizienztabelle mit zwei Einträgen zu beziehen, die für jedes Speichersystem (12) die Effizienz dieses Speichersystems (12) abhängig von einem Ladezustand des Speichersystems und der bewerteten erforderlichen Leistung angibt.

6. Verfahren zum Verwalten einer Vielzahl von Energiespeichersystemen (12), die parallel angeordnet und mit mindestens einer Last (14, 16) verbunden sind, mittels einer Verwaltungsvorrichtung (10) nach einem der vorherigen Ansprüche, umfassend
- einen Schritt eines Bewertens der erforderlichen Leistung, die die notwendige Leistung zum Versorgen der mindestens einen Last (14, 16) ist,
- einen Schritt eines Berechnens der in den Energiespeichersystemen (12) verfügbaren Leistung, wobei die verfügbare Leistung der Leistung entspricht, die von jedem Speichersystem bereitstellbar ist und/oder der Leistung, die von jedem Speichersystem absorbierbar ist, **dadurch gekennzeichnet, dass** das Verfahren Folgendes umfasst:
- einen Schritt eines Schätzens einer von den Energiespeichersystemen (12) empfangenen Leistung, wobei die empfangene Leistung jene ist, die von externen Versorgungsquellen und durch regeneratives Bremsen bereitgestellt wird,
- einen Schritt eines Bestimmens der Anzahl der Energiespeichersysteme, die aktiviert werden sollen, und
- einen Schritt eines Bestimmens des oder der Speichersysteme, das/die aktiviert oder deaktiviert werden sollen, abhängig von der geschätzten erforderlichen Leistung, der verfügbaren Leistung, der geschätzten empfangenen Leistung und vorteilhafterweise der in jedem Speichersystem gespeicherten Energie, und
- einen Schritt eines Aktivierens und Deaktivierens der unabhängig voneinander bestimmten Energiespeichersysteme (12) nach den Bestimmungsschritten.

7. Verwaltungsverfahren nach Anspruch 6, wobei der Schritt eines Bestimmens unter Minimierung der Unterschiede zwischen den in den verschiedenen Energiespeichersystemen gespeicherten Energien durchgeführt wird, insbesondere indem sie im Fall einer abzugebenden Leistung vorrangig die Speichersysteme, die die größte Energiemenge speichern, oder im Fall einer aufzunehmenden Leistung die Speichersysteme, die die geringste Energiemenge speichern, aktivieren, und indem sie die Unterschiede in der Beanspruchung der verschiedenen Energiespeichersysteme minimieren.

8. Verwaltungsverfahren nach einem der Ansprüche 6 oder 7, wobei während des Schritts eines Bestimmens vorrangig die Speichersysteme (12) aktiviert werden, die abhängig von der bewerteten erforderlichen Leistung und der gespeicherten Energie den besten Wirkungsgrad aufweisen, und/oder vorrangig die Speichersysteme (12) deaktiviert werden, die abhängig von der bewerteten erforderlichen Leistung und der gespeicherten Energie den schlechtesten Wirkungsgrad aufweisen.

## Claims

1. A device (10) for managing a plurality of energy storage systems (12) arranged in parallel and connected to at least one load (14, 16), in particular at least one traction system (14) and/or at least one auxiliary equipment (16), comprising:
- means (24) for evaluating a power requirement, which is the power required to supply the at least one load (14, 16),
- means (32) for calculating a power available in the energy storage systems (12), the available power corresponding to the power deliverable by each storage system and/or to the power absorbable by each storage system,
- means (36) for activating and deactivating the energy storage systems (12) independently of each other,
- means (30) for determining each storage system (12) to be activated or deactivated, as a function of the power requirement evaluated and the power available and advantageously the energy stored in each storage system,
**characterised in that** the management device comprises means for estimating a power received by the energy storage systems (12), the power received being that supplied by external power sources and by regenerative braking, and **in that** the means for determining each storage system to be activated or deactivated are suitable for determining each energy storage system to be activated or deactivated also as a function of the estimated power received.

2. A management device (10) according to any one of the preceding claims, configured for the management of energy storage systems (12) each comprising at least one energy storage means (20) and a power converter (22) connected to the corresponding energy storage means (20).

3. A management device (10) according to any one of the preceding claims, in which the determination means (30) are configured to minimise the differences between the energies stored in the various energy storage systems (12), in particular by activating as a priority the storage systems (12) storing the largest quantity of energy, in the case of a power to be delivered, or the storage systems storing the smallest quantity of energy, in the case of a power to be absorbed, and advantageously by minimising the load differences of the various energy storage systems.

4. A management device (10) according to any one of the preceding claims, in which the determination means (30) are configured to activate as a priority the storage systems (12) with the best efficiency as a function of the power requirement evaluated and the energy stored.

5. A management device (10) according to claim 4, wherein the determination means (30) are configured to refer to a two-entry efficiency table giving, for each storage system (12), the efficiency of this storage system (12) as a function of a state of charge of the storage system and the power requirement evaluated.

6. A method of managing a plurality of energy storage systems (12) arranged in parallel and connected to at least one load (14, 16), by means of a management device (10) according to any one of the preceding claims, comprising
- a step for evaluating the power required, which is the power required to supply the at least one load (14, 16),
- a step for calculating the power available in the energy storage systems (12), the available power corresponding to the power deliverable by each storage system and/or the power absorbable by each storage system,
**characterised in that** the method comprises:
- a step of estimating a power received by the energy storage systems (12), the power received being that supplied by external power sources and by regenerative braking,
- a step for determining the number of energy storage systems to be activated, and
- a step for determining the storage system(s) to be activated or deactivated, as a function of the evaluated power requirement, the available power, the estimated received power, and advantageously the energy stored in each storage system, and
- a step of activating and deactivating the energy storage systems (12) determined, independently of each other, following the determination steps.

7. A management method according to claim 6, in which the determination step is carried out by minimising the differences between the energies stored in the various energy storage systems, in particular by activating as a priority the storage systems storing the largest quantity of energy in the case of power to be delivered or the storage systems storing the smallest quantity of energy in the case of power to be absorbed, and by minimising the differences in load on the various energy storage systems.

8. Management method according to any one of claims 6 or 7, in which, during the determination step, priority is given to activating the storage systems (12) having the best efficiency as a function of the assessed power requirement and the stored energy, and/or priority is given to deactivating the storage systems (12) having the worst efficiency as a function of the assessed power requirement and the stored energy.
